# EUROPEAN PATENT SPECIFICATION

(11) **EP 0 654 014 B1**
(45) Date of publication and mention of the grant of the patent: **04.12.1996**
(21) Application number: 93919552.5
(22) Date of filing: 04.08.1993
(51) Int. Cl.: C02F 1/48, C02F 5/00

(54) **ANTI-CALCAREOUS MAGNETIC WATER CONDITIONER, WITH IMPROVEMENTS WHICH BRING ABOUT ALTERNATIVE SOLUTIONS**
MAGNETISCHE WASSERBEHANDLUNGSVORRICHTUNG ZUR VORBEUGUNG DER BILDUNG VON KALKNIEDERSCHLÄGEN MIT VERBESSERUNGEN, DIE NEUE LÖSUNGEN HERBEIFÜHREN
ADOUCISSEUR D'EAU MAGNETIQUE ANTI-CALCAIRE AMELIORE OFFRANT DES SOLUTIONS NOUVELLES

(30) Priority: 07.08.1992 IT BS920098; 17.06.1993 IT BS930072; 14.07.1993 IT BS930079
(43) Date of publication of application: 24.05.1995
(73) Proprietor: CIMA S.R.L., I-25081 Bedizzole (IT)
(72) Inventor: CIMA, Rolando, I-25081 Bedizzole (IT)
(74) Representative: Righetti, Giuseppe
(86) International application number: IT9300088
(87) International publication number: WO9403400

(56) References cited:
- WO-A-90/01018
- FR-A- 2 611 691

## Description

### TECHNICAL FIELD-

The above mentioned invention is a new instrument with magnetic properties, for application to water works so that it will enable the water to reach the areas where it is to be used, without scaling pipes and tanks.

### TECHNICAL POSITION-

At the moment, among the many known anti-calcareous magnetic water conditioning instruments, there is one which has been studied and perfected and which is capable of equipping the water works which convey the water where it is to be used. Many are the instruments which have been manufactured, and all of them are in more or less a position to carry out their function of intercepting the water which is made to pass through them. This new instrument has also been studied and tested in order to avoid the difficulties which create many inconveniences to the water works, without using complex and costly procedures, and without using chemical substances and connections to sources of electric energy.-

### AIMS AND ADVANTAGES OF THE INVENTION-

The action of the above mentioned water conditioner suspends all the needle-like particles floating in the water which are inevitably transported by it. This avoids these particles from gathering together on the surface of containers and piping, thus transforming the mineral salts contained in the water, from CA (HCO3)2 (calcium hydrate carbonate or bicarbonate), to CO2 + H2O + CA CO3 (calcium carbonate, a sub-form of calcite); this avoids the formation of calcareous deposits and the consequent partial or total occlusion of the pipes and the loosening of the scales which damage, pipes, taps, valves and reservoirs.

The above mentioned water conditioner, has the following advantages:
- Fitted to pipes, it creates a sole efficient point for the treatment of cold or hot water.
- It protects everything that contains, controls or intercepts water
   movement against the formation of scales, improving the thermal efficiency of the water work.
   - In swimming pools and in spas it favours the diffusion of chemical reagents, improving their bacteriological efficiency.
      - In water boilers and home appliances, it avoids the formation of scales, and the use of detergents for their periodical cleaning.
   - It is easily assembled because it is composed of a few simple parts which are easy to use and to put together.
      It is easily fitted to machines and water works.
      - It can be placed next to equipment which does not tolerate the proximity of magnets, since it doesn't cause any difficult situations.
   - It has been created to obtain relevant results regarding the water to be treated at high degrees of scales abatement, both due to its ability and abatement speed.
   - It doesn't require any maintenance, cleaning, or spare parts.
   - Using the alternate solutions projected for its manufacture, its production and assembly are made that much easier.

### DRAWINGS-

In order to define better this invention, a description thereof, in greater detail, and drawn up according to a chosen criterion, will now follow, as an example, which is neither binding nor limiting and which refers to the drawings of:
FIG. 1 - Water conditioner shown as it appears when it is not fitted to the pipes;
FIG. 2 - the same, fitted with distance sleeve, seen during completion of the assembly;
FIG. 3 - BB section of the water conditioner with distance sleeve, as per marking on FIG. 4;
FIG. 4 - AA section of the water conditioner with distance sleeve as indicated under FIG. 3;
FIG. 5 - water conditioner with isolators, executed as an alternative to the first and viewed while its assembly is being completed;
FIG. 6 - DD section of the water conditioner with isolators, as per marking on FIG. 7;
FIG. 7 - CC section of the water conditioner with isolators, as indicated under FIG. 6;
FIG. 8 - water conditioner complete with protruding elements and bevelled off in other cases, executed as an alternative to the first, and viewed while its assembly is being completed;
FIG. 9 - FF section of the water conditioner as viewed in the previous drawing, as per marking on FIG. 10;
FIG. 10 - EE section of the water conditioner indicated under FIG. 9;
FIG. 11 -water conditioner with two parts internal casing, executed as an alternative to the previous ones, and viewed as its assembly is being completed;
FIG. 12 - HH section of the water conditioner with two parts internal casing, as per marking on FIG. 13;
FIG. 13 - GG section of the water conditioner with two parts internal casing, indicated under FIG: 12;
FIG. 14 - it shows the position taken by the two parts which make up the internal casing in relation to the rectangular ring, the two magnetic elements and the external casing.

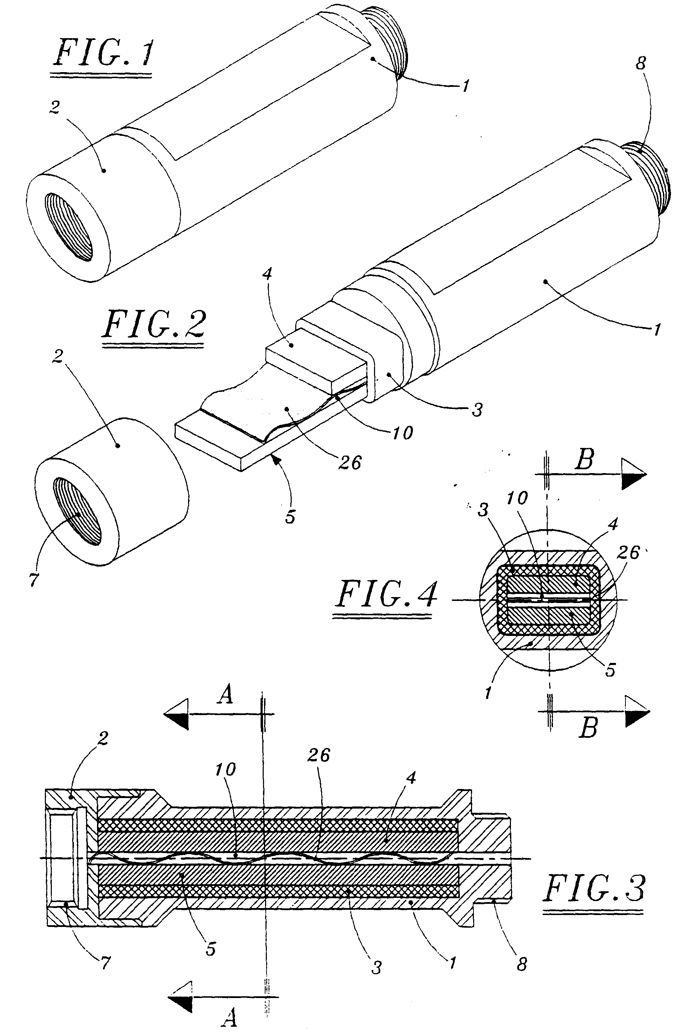

All the figures emphasise the structure of the above mentioned water conditioner created so as to be fitted to rigid, or flexible pipes. When studying FIGURES. 1, 2, 3 and 4, one notices that the casing of cable 1 which is made of anti-magnetic metal, or in plastic material, is provided with two equal and parallel planes, which lighten it and are a characteristic thereof. It contains all the necessary elements for the functioning of the water conditioner, which is closed by cap 2, also made of plastic material or anti-magnetic metal, and which, moreover, closes and tightens together all the internal components, keeping them in contact. Cap 2 may be fitted to the casing of cable 1 through a thread, a trip stop coupling, or even through welding.
Cable casing 1 and cap 2 are completed through screw tap or groove threading 7 and 8 according to the need, so as to join the apparatus to the tubes or pipes of various kinds.

Iron metallic tubular casing 3 is fitted to the cavity of casing 1 and acts as a screen for the parts enclosed in it. These are the parallelepiped magnetic elements 4 and 5.

The metallic tubular casing 3, which is opened at both ends, contains magnetic elements 4 and 5 which must always be fitted into it, as shown in the figures; these must also be put in a condition of reciprocal attraction, so as to be able to interconnect if free to do so without the interference from external pressures to guide them, so that the two surfaces, which come into contact, may unite perfectly. The planes of these two elements, which tend to be attracted to one another, are kept apart by distance sleeve 26, composed of a stainless plate, corrugated and punctured, or with a stainless steel net, both able to create the transit channel 10, which is necessary for the water to be treated and which must transit through the water conditioner.

Distance sleeve 26 keeps magnetic elements 4 and 5 separate. It is kept still by the force of attraction which is created by them reciprocally and which creates transit channel 10, through which the water to be treated is forced to pass.

The metallic tubular casing 3, which guarantees a perfect external isolation for elements 4 and 5, allows these to create the necessary magnetic field which influences the water while this passes through transit channel 10. For these reasons it is possible to effect within channel 10, the physical transformation of the lime contained in the water, which is put in suspension and it will be impossible for it to stick to the walls of the pipes into which the water flows.

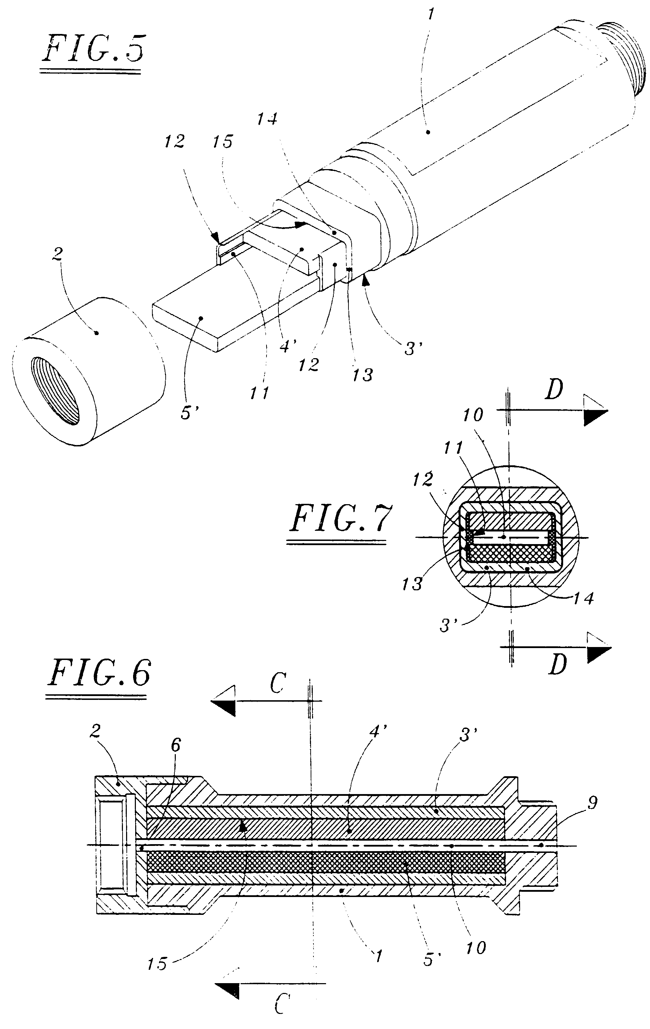

Figures 5, 6, and 7 show the water conditioner as an alternative to the first one, which deals with the metallic tubular casing 3, in rectangular section as well, where its walls 13 are thinner than those of walls 14, see figures 5 and 7, as, in its cavity 15, over and above the magnetic elements 4 and 5, equally parallelepiped and perfectly equal among themselves, there are also two isolator elements 12 contained therein, which, through protrusion 11, maintain separate and perfectly arranged magnetic elements 4 and 5 as indicated under figure 5. The said conformation of the parts, helps the arrangement of the elements at the time of their assembly, considering, also in this case, and as said before, that the magnetic elements 4 and 5 must always be put and positioned into the metallic tubular casing 3 as previously said.

The two magnetic elements, which are kept separate from protrusions 11 of the isolator elements 12, always create transit channel 10 and for this reason: they simplify the assembly phases of the water conditioner; the chances increase that the above mentioned needle-like, floating particles, will not unite on the surfaces inside the pipes of the reservoirs through which the water passes.

The passing of the water through the water conditioner is always guaranteed by apertures 6 and 9 executed on cap 2 and on the cable casing 1, as these possess sections which are adequate to the situation.

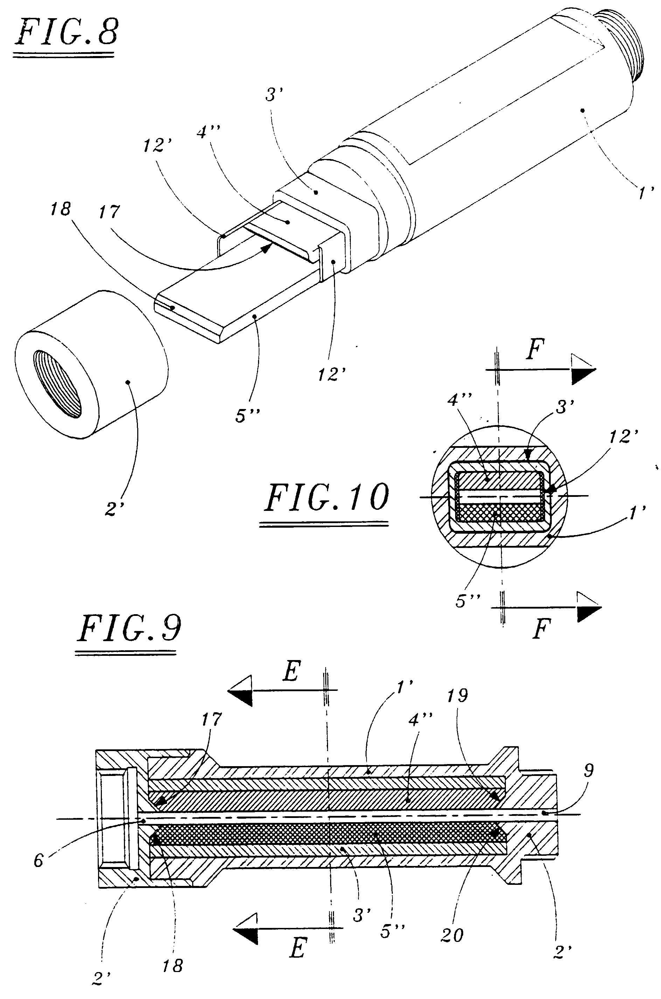

FIGURES 8, 9 and 10 show the action of the water conditioner as an alternative to the previous ones. This happens through the effect of the slanted protrusions 17, 18, 19 and 20, in cable casing 1' and cap 2' through the relevant bevelling effected in relation to the magnetic elements 4" and 5". Protrusions and bevelling must be coupled in order, to obtain an easier execution and a faster assembly of the apparatus with the simplification of isolating elements 12', put and positioned into the metallic tubular casing 3'.

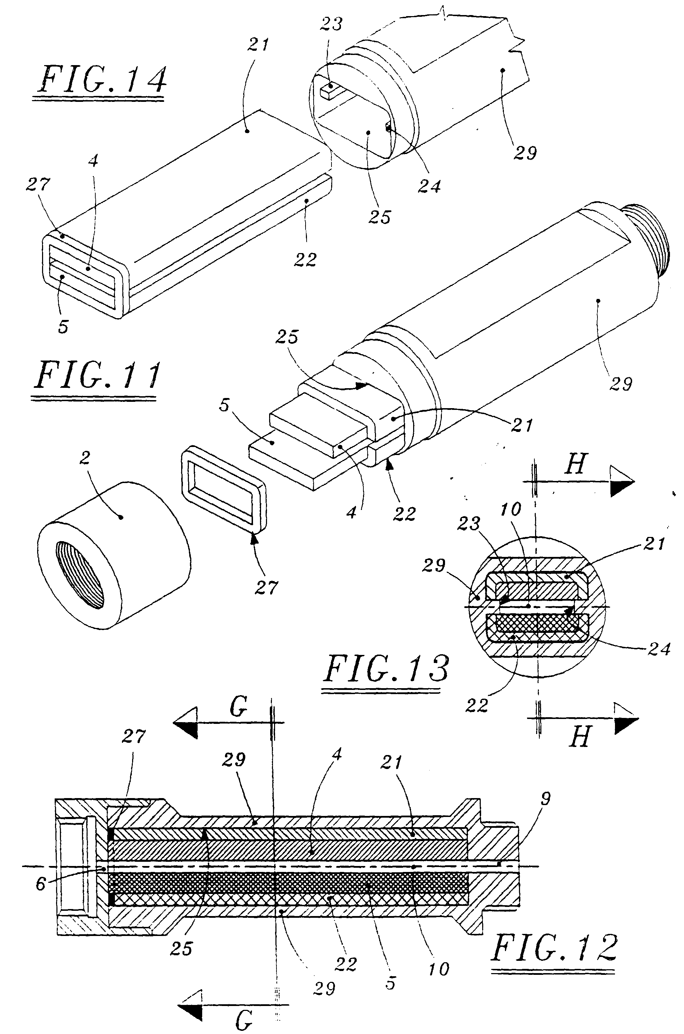

FIGURES 11, 12, 13, and 14, show a new solution, for the particular conditioning of water as an alternative to the previous ones and are the result of a further perfecting, where the external casing 29 contains and guides the intemal metallic casing composed of two metallic elements 21 and 22, thus presenting the new solution, as when united and composed, they make up the tubular casing guided by finning 23 and 24, as produced in the core 25 of casing 29. Furthermore, the same finning 23 and 24, protrude from the metallic casing towards the inside, also guiding elements 4 and 5, carrying out and defining transit channel 10, destined to the passage of the water to be treated, as indicated under FIG. 13, executed according to the measurements of apertures 6 and 9 of casing 29 and of cap 2.

Elements 21 and 22, which form the internal casing for the magnetic elements 4 and 5, are equal to each other; they have walls of a constant thickness; they can be obtained through shearing, and bending of the rectangular plates; they can be easily and perfectly fitted.

This makes assembling of the whole apparatus easier.

According to this condition the deriving instrument, would not be in a position to obtain the required result, as it should function without the iron tube which constitutes the required magnetic field. Therefore, in order to obtain the required magnetic field, and by using elements 21 and 22, it has been arranged to unite them on contact, by fitting iron ring 27, as shown in FIGURES 11 and 12. This closes and completes the magnetic field remaining solidly united to elements 4 and 5 for the pushing which activates cap 2.

The anti-calcareous magnetic water conditioner, which is the object of the invention, and the perfectioned models which have been described, carry out all the same prerogatives in relation to the water that flows into their channels 10.

## Claims

1. An anti-calcareous magnetic water conditioner consisting of an external cable tubular casing (1) closed by a cap (2), an internal tubular casing (3) fitted to the cavity of the external casing (1) and magnetic elements (4, 5) contained in said internal tubular casing (3), characterized in that the internal tubular casing (3) is made of iron and the magnetic elements (4, 5) are parallelepiped and equal, put into a seat of the internal casing (3), fitted longitudinally with their axes parallel to the axis of said internal casing (3) and kept apart to create a magnetic field and a transit (10) for the passage of the water to be treated.

2. The anti-calcareous magnetic water conditioner-according to claim 1, characterized in that the external cable tubular casing (1) and the cap (2) are made of plastic material or non-ferrous metal.

3. The anti-calcareous magnetic water conditioner-according to anyone of the preceding claim, characterized in that the magnetic elements (4, 5) are kept apart by a distant sleeve (26) to create the magnetic field and a transit channel (10) for the passage of the water to be treated.

4. The anti-calcareous magnetic water conditioner-according to claim 3 characterized in that the distant sleeve (26) is made of a stainless plate, corrugated and punctured, or of a stainless steel net.

5. The anti-calcareous magnetic water conditioner-according to anyone of the preceding claims from 1 to 2, characterized in that two isolator elements (12) are arranged into the cavity (15) of the internal casing (3') having walls (13, 14) different thickness, each of said elements (12) being provided with a protrusion (11) which keeps apart magnetic elements (4', 5') to create the transit channel (10) and the magnetic field.

6. The anti-calcareous magnetic water conditioner-according to anyone of the preceding claims, from 1 to 2, characterized in that the external cable (1') and the cap (2) are provided with slanted protrusions (17, 18, 19, 20) coupled together with as many bevels executed in magnetic elements (4", 5") to create the magnetic field and the transit channel (10).

7. The anti-calcareous magnetic water conditioner-according to claim 5 or 6, characterized in that distance sleeve elements (12, 12'), made of plastic material, are positioned into the internal metallic tubular casing (3') to create the isolation among magnetic elements (4', 5', and 4", 5").

8. The anti-calcareous magnetic water conditioner-according to anyone of the preceding claims from 1 to 2, characterized in that the internal tubular casing consists of two metallic elements (21, 22) which, together with a ring (27), execute a sole magnetic field wound the magnetic elements (4, 5).

9. The anti-calcareous magnetic water conditioner-according to claim 8, characterized in that internal casing, composed of the two metallic elements (21, 22), is guided by finnings (23, 24) as produced in the core (25) of the external casing (29) and protrube from the internal casing towards the inside thus also guiding the magnetic elements (4, 5) to define the transit channel (10) executed according to the measurements of apertures (6, 9) of the external casing (29) and cap (2).

## Patentansprüche

1. Magnetische Wasserbehandlungsvorrichtung zur Vorbeugung der Bildung von Kalkniederschlägen, bestehend aus einer durch einen Verschluß (2) geschlossenen Aussenrohrhülle (1), aus einer im Hohlraum der Aussenhülle (1) aufgenommenen Innenrohrhülle (3), und aus in der Innnenrohrhülle (3) aufgenommenen, magnetischen Elementen (4,5), dadurch gekennzeichnet, daß die Innenrohrhülle (3) in Eisen ausgeführt ist und die magnetischen Elemente (4,5) parallelflach und gleich ausgeführt, in einer Aufnahme der Innenhülle (3) angeordnet, in Längsrichtung mit ihren zur Achse der Innnenhülle (3) parallelen Achsen eingebracht und zueinander beabstandet sind, um ein magnetisches Feld und einen Durchgang (10) für den Durchfluß des zu behandelnden Wassers zu schaffen.

2. Magnetische Wasserbehandlungsvorrichtung zur Vorbeugung der Bildung vun Kalkniederschlägen nach Anspruch 1, dadurch gekennzeichnet, daß die Aussenrohrhülle (1) und der Verschluß (2) aus Kunststoff oder aus einem Nichteisenmetall bestehen.

3. Magnetische Wasserbebehandlungsvorrichtung zur Vorbeugung der Bildung von Kalkniederschlägen nach einem der vorstehenden Ansprüche, dadurch gekennzeichnet, daß die magnetischen Elemente (4,5) durch ein Abstandsstück (26) beabstandet gehalten werden, um das magnetische Feld und einen Durchgangskanal (10) für den Durchfluß des zu behandelnden Wassers zu schaffen.

4. Magnetische Wasserbehandlungsvorrichtung zur Vorbeugung der Bildung von Kalkniederschlägen nach Anspruch 3, dadurch gekennzeichnet, daß das Abstandsstück (26) aus einem rostfreien, gewellten und gelöcherten Stahlblech oder aus einem rostfreien Stahlgitter gebildet ist.

5. Magnetische Wasserbehandlungsvorrichtung zur Vorbeugung der Bildung von Kalkniederschlägen nach einem der vorstehenden Ansprüche von 1 bis 2, dadurch gekennzeichnet, daß zwei Isolierelemente (12) im Hohlraum (15) der Innenhülle (3') mit Wänden (13, 14) mit verschiedenen Wandstärken angeordnet sind, wobei diese Isolierelemente (12) mit einem Vorsprung (11) versehen sind, der die magnetischen Elemente (4',5') beabstandet hält, um den Durchgangskanal (10) und das magnetische Feld zu bilden.

6. Magnetische Wasserbehandlungsvorrichtung zur Vorbeugung der Bildung von Kalkniederschlägen nach einem der vorstehenden Ansprüche von 1 bis 2, dadurch gekennzeichnet, daß die Aussenrohrhülle (1') und der Verschluß (2) mit abgeschrägten Vorsprüngen (17,18,19,20) versehen sind, die mit eben so vielen Abschrägungen gekoppelt sind, die an den magnetischen Elementen (4",5") ausgeführt sind, um das magnetische Feld und den Durchgangskanal (10) zu bilden.

7. Magnetische Wasserbehandlungsvorrichtung zur Vorbeugung der Bildung von Kalkniederschlägen nach Anspruch 5 oder 6, dadurch gekennzeichnet, daß die die Abstandstücke (12, 12') bildenden, in Kunststoff ausgeführten Elemente in der Innenrohrhülle aus Metall (3') angeordnet sind, um die Isolierung zwischen den magnetischen Elementen (4',5'und 4",5") zu bilden.

8. Magnetische Wasserbehandlungsvorrichtung zur Vorbeugung der Bildung von Kalkniederschlägen nach einem der vorstehenden Ansprüche von 1 bis 2, dadurch gekennzeichnet, daß die Innenrohrhülle aus zwei Metallelementen (21, 22) besteht, die zusammen mit einem Ring (27) ein einziges, die magnetischen Elemente (4,5) umgebendes, magnetisches Feld bilden.

9. Magnetische Wasserbehandlungsvorrichtung zur Vorbeugung der Bildung von Kalkniederschlägen nach Anspruch 8, dadurch gekennzeichnet, daß die aus den beiden Metallelementen (21,22) bestehende Innenhülle durch Verrippungen (23, 24) geführt wird, die im Innenteil (25) der Aussenhülle (29) ausgebildet sind und von der Innenhülle nach innen ragen, wobei somit auch die magnetischen Elemente (4,5) geführt werden, um den Durchgangskanal (10) festzulegen, der gemäß den Abmessungn der Öffnungen (6,9) der Aussenhülle (29) und des Verschlusses (2) gebildet wird.

## Revendications

1. Adoucisseur d'eau magnétique anti-calcaire comportant une enveloppe tubulaire extérieure creuse (1) fermée par un capuchon (2), une enveloppe tubulaire intérieure (3) insérée dans la cavité de l'enveloppe extérieure (1) et des éléments magnétiques (4, 5) contenus dans ladite enveloppe tubulaire intérieure (3), caractérisé en ce que l'enveloppe tubulaire intérieure (3) est fabriquée en fer et les éléments magnétiques (4, 5) sont parallélépipédiques et égaux, placés dans un logement de l'enveloppe intérieure (3), insérés longitudinalement avec leurs axes parallèles à l'axe de ladite enveloppe intérieure (3) et maintenus espacés pour créer un champ magnétique et une voie pour le passage de l'eau à traiter.

2. Adoucisseur d'eau magnétique anti-calcaire selon la revendication 1, caractérisé en ce que l'enveloppe tubulaire extérieure (1) creuse et le capuchon (2) sont fabriqués en matière plastique ou en métal ferreux.

3. Adoucisseur d'eau magnétique anti-calcaire selon l'une quelconque des revendications précédentes, caractérisé en ce que les éléments magnétiques (4, 5) sont maintenus espacés par une entretoise (26) pour créer le champ magnétique et un canal de passage (10) pour le passage de l'eau à traiter.

4. Adoucisseur d'eau magnétique anti-calcaire selon la revendication 3, caractérisé en ce que l'entretoise (26) est formée d'une tôle en acier inoxydable, ondulée et perforée, ou d'un filet en acier inoxydable.

5. Adoucisseur d'eau magnétique anti-calcaire selon l'une quelconque des revendications précédentes, 1 à 2, caractérisé en ce que deux éléments isolants (12) sont disposés dans la cavité (15) de l'enveloppe intérieure (3') ayant des parois (13, 14) d'épaisseurs différentes, chacun desdits éléments (12) étant pourvu d'une saillie (11) maintenant les éléments magnétiques (4', 5') espacés l'un de l'autre pour créer le canal de passage (10) et le champ magnétique.

6. Adoucisseur d'eau magnétique anti-calcaire selon l'une quelconque des revendications précédentes, 1 à 2, caractérisé en ce que l'enveloppe extérieure creuse (1') et le capuchon (2) sont pourvus de saillies inclinées (17, 18, 19, 20) épousant un nombre égal de chanfreins exécutés sur les éléments magnétiques (4", 5") pour créer le champ magnétique et le canal de passage (10).

7. Adoucisseur d'eau magnétique anti-calcaire selon la revendication 5 ou 6, caractérisé en ce que des éléments formant entretoises (12, 12') fabriqués en matière plastique sont positionnés dans l'enveloppe tubulaire intérieure en métal (3') pour créer un isolement entre les éléments magnétiques (4', 5' et 4", 5").

8. Adoucisseur d'eau magnétique anti-calcaire selon l'une quelconque des revendications précédentes, 1 à 2, caractérisé en ce que l'enveloppe tubulaire intérieure est formée de deux éléments métalliques (21, 22) qui, ensemble avec une bague (27), effectuent un champ magnétique unique entourant les éléments magnétiques (4, 5).

9. Adoucisseur d'eau magnétique anti-calcaire selon la revendication 8, caractérisé en ce que l'enveloppe intérieure, formée des deux éléments métalliques (21, 22), est guidée par des ailettes (23, 24) prévues à la partie intérieure (25) de l'enveloppe extérieure (29) et faisant saillie de l'enveloppe intérieure vers l'intérieur, de manière à guider également les éléments magnétiques (4, 5) pour définir le canal de passage (10) formé suivant les mesures des ouvertures (6, 9) de l'enveloppe extérieure (29) et du capuchon (2).
